# EUROPÄISCHE PATENTSCHRIFT

(11) **EP 2 563 973 B1**
(45) Veröffentlichungstag und Bekanntmachung des Hinweises auf die Patenterteilung: **26.11.2014**
(21) Anmeldenummer: 11712762.1
(22) Anmeldetag: 29.03.2011
(51) Int. Cl.: E02B 8/02, B01D 33/333

(54) **SIEBBANDMASCHINE**
SCREENING BELT MACHINE
MACHINE À TAMIS SANS FIN

(30) Priorität: 30.04.2010 DE 102010019133
(43) Veröffentlichungstag der Anmeldung: 06.03.2013
(73) Patentinhaber: Bilfinger Water Technologies GmbH, 65326 Aarbergen (DE)
(72) Erfinder: HEIL, Klaus, 76889 Schweigen-Rechtenbach (DE)
(74) Vertreter: Jany, Peter
(86) Internationale Anmeldenummer: PCT/EP2011/001557
(87) Internationale Veröffentlichungsnummer: WO 2011/134579

(56) Entgegenhaltungen:
- DE-A1- 19 654 132
- DE-A1- 19 935 321
- JP-A- 2002 294 666
- US-A- 4 892 652

## Beschreibung

Die Erfindung betrifft eine Siebbandmaschine zum mechanischen Abscheiden und Herausfördern von festen Bestandteilen, Festkörpern oder Feststoffen aus einem in einem Gerinne fließenden Flüssigkeitsstrom, insbesondere einen Sieb- oder Filterrechen für Prozess-, Kühl- oder Abwasserströmungen oder für Klär- oder Wasserkraftanlagen oder für den Einsatz in einem wasserführenden Kanal eines Kühlwasser-Einlaufbauwerkes eines Kraftwerks, mit einem in einer Bewegungsrichtung umlaufenden, in den Flüssigkeitsstrom eintauchenden Endlossiebband, das in einem siebaktiven Abschnitt des Endlossiebbandes, der in dem Flüssigkeitsstrom angeordnet ist, eine Siebfläche in dem Gerinne bildet, wobei der siebaktive Abschnitt des Endlossiebbandes zumindest annähernd oder im Wesentlichen quer zur Strömungsrichtung des Flüssigkeitsstroms in dem Gerinne ausgerichtet ist, und mit einer Antriebsvorrichtung zum Antreiben des Endlossiebbandes in seiner Bewegungsrichtung. Ferner richtet sich die Erfindung auf ein entsprechendes Verfahren zum mechanischen Abscheiden und Herausfördern von festen Bestandteilen, Festkörpern oder Feststoffen aus einem in einem Gerinne fließenden Flüssigkeitsstrom mit einer Siebbandmaschine.

Siebbandmaschinen werden üblicherweise mit einer Anzahl in Bewegungsrichtung des Endlossiebbandes aufeinanderfolgenden, nebeneinander angeordneten Siebfeldern versehen, die in der Regel untereinander verkettet sind und ein umlaufendes, in den Flüssigkeitsstrom eintauchendes Endlossiebband bilden, sowie mit einem Antrieb für das Endlossiebband, wodurch das Abscheiden und Herausfördern der Feststoffe aus dem Flüssigkeitsstrom vorzugsweise kontinuierlich erfolgen kann. Die Siebfelder weisen Siebeinsätze zum Abtrennen von Feststoffen aus dem Flüssigkeitsstrom auf, wobei die Feststoffe die Siebbandmaschine nicht passieren können, sofern ihre Abmessungen größer als die Spalt- oder Maschenweite der Siebeinsätze sind und sich somit an den Siebfeldern abscheiden. Es können verschiedenste Siebeinsätze verwendet werden, beispielsweise Siebgewebe, perforierte Siebplatten, Spaltsiebe aus Einzelstäben, wobei die Einzelstäbe ggf. nicht rund sind, sondern ein optimiertes Profil aufweisen, Siebroste oder sonstige beliebige zur Filtration geeignete Siebmaterialien.

Durch die Umlaufbewegung des Endlossiebbandes werden die an den Siebfeldern abgeschiedenen Feststoffe aus der Flüssigkeitsströmung nach oben gefördert und an einer über dem Wasserspiegel liegenden Abwurfstelle von den Siebfeldern abgeworfen oder abgenommen. Mittels Abspritzen oder Absprühen der Siebfelder an der Abwurfstelle kann eine vollständige Siebfeldabreinigung erfolgen, bevor die Siebfelder wieder in den Flüssigkeitsstrom eintauchen.

Solche Siebbandmaschinen sind in verschiedenen Ausgestaltungen bekannt, die sich hinsichtlich der Durchströmungsrichtungen der aufwärts und abwärts bewegten Abschnitte des Endlossiebbandes unterscheiden. Es gibt die Varianten "querdurchströmt", "von außen nach innen" und "von innen nach außen". Bei der Bauartvariante "querdurchströmt" sind die Siebfelder quer zur Strömungsrichtung des Gerinnes angeordnet und die sich abwärts (nach unten) bewegenden Siebfelder sind in Strömungsrichtung hinter (stromabwärts) den sich aufwärts (nach oben) bewegenden Siebfeldern angeordnet.

Eine Siebbandmaschine der Bauart "querdurchströmt" umfasst nach dem Stand der Technik ein aus rechteckig geformten Siebfeldern gebildetes Endlossiebband, dessen Siebfelder untereinander gelenkig verbunden sind. Die einzelnen Siebfelder sind gegeneinander um eine horizontale Achse verschwenkbar. Das Endlossiebband wird in den Flüssigkeitsstrom eingetaucht, wodurch ein stromaufwärts liegender Abschnitt und ein stromabwärts liegender Abschnitt des Endlossiebbandes vom Flüssigkeitsstrom durchströmt werden. Der stromaufwärts liegende Abschnitt und der stromabwärts liegende Abschnitt des Endlossiebbandes sind über eine obere und eine untere Umlenkung miteinander verbunden, wobei an der oberen Umlenkung üblicherweise eine Abspritzeinrichtung für die Siebfelder vorgesehen ist.

Das Endlossiebband überdeckt bei den querdurchströmten Ausführungen in aller Regel den Querschnitt des Flüssigkeitsstroms vollständig, sodass die Feststoffe die Siebvorrichtung nicht passieren können, sofern ihre Abmessungen größer als die Spalt- oder Maschenweite der Siebfelder sind und sich somit an den Siebfeldern abscheiden.

Bei bekannten querdurchströmten Siebbandmaschinen setzt sich der Schmutz auf der Außenseite des Siebbandes ab und wird demzufolge, nachdem er mittels des Siebbandes herausgefördert wurde, mit einer auf die Innenseite des Siebbandes einwirkenden Reinigungsvorrichtung von innen nach außen von dem Siebband abgesprüht. Die Sprühdüsen sind also zwischen dem sich aufwärts bewegenden und dem sich abwärts bewegenden Abschnitt des Siebbandes angeordnet, also "innen", und sprühen den Schmutz nach "außen".

Nachteilig bei diesem Stand der Technik gemäß der querdurchströmten Ausführungsform ist, dass der gewünschte Reinigungseffekt des Flüssigkeitsstroms im Wesentlichen bereits beim Durchströmen des stromaufwärts liegenden Abschnitts des Endlossiebbandes erzielt wird, aber dennoch auch der stromabwärts liegende Abschnitt des Endlossiebbandes vom Flüssigkeitsstrom passiert werden muss, sodass sich der beim Durchströmen des Endlossiebbandes unvermeidliche Druckverlust verdoppelt. Bei querdurchströmten Siebbandmaschinen tragen nur die stromaufwärts liegenden, aufwärts bewegten Siebfelder zum Siebvorgang bei. Die stromabwärts liegenden, abwärts bewegten Siebfelder tragen nicht zur Siebwirkung bei, da sie stromabwärts von den aufwärts bewegten Siebfeldern liegen. Dennoch muss die Strömung die zwei aufeinander folgenden Abschnitte mit Siebfeldern durchströmen, was einen höheren Druckverlust in der Flüssigkeitsströmung verursacht.

Dieser Druckverlust entspricht einem meist unerwünschten Abfall des Flüssigkeitsspiegels, der zum Teil durch Einsatz von Pumpen und dergleichen wieder angehoben werden muss. Der Nachteil des Druckverlustes ist sowohl für Abwasseranlagen, bei denen durch Pumpen oder andere Maßnahmen für einen Ausgleich gesorgt wird, als auch für Kühlwasseranlagen, die ein bevorzugtes Anwendungsgebiet der vorliegenden Erfindung darstellen, gegeben. Bei Kühlwasseranlagen sind für die gesamte Wassermenge große Hauptkühlwasserpumpen vorhanden. Der zusätzliche Druckverlust entspricht einem niedrigeren Wasserspiegel in der Pumpenkammer, der von den Kühlwasserpumpen mit überwunden werden muss. Dies führt zu einem erheblichen Mehraufwand an Energie und somit Betriebskosten. Auch die erforderliche Baulänge kann insbesondere aus Kostengründen nachteilig sein.

Um diese Probleme zu lösen, ist in der Anmeldung DE 19654132 A1 der Anmelderin vorgeschlagen worden, eine Siebvorrichtung der Bauart "querdurchströmt" mit Siebfeldern auszustatten, die im stromabwärts liegenden hinteren Abschnitt des Endlossiebbandes aus diesem herausklappbar sind, um in einer Offenstellung den Strömungsquerschnitt größtenteils freizugeben. Bauliche Maßnahmen zum Umlenken des Flüssigkeitsstromes entfallen hierdurch. Die Siebfelder werden im Wesentlichen dennoch nur einmal durchströmt, sodass der Gesamtdruckverlust vorteilhaft gering bleibt. Allerdings wird der Aufbau des Endlossiebbandes hierdurch verkompliziert und es muss einiger Aufwand getrieben werden, um die Dichtheit der geschlossenen Siebfelder im vorderen, stromaufwärts gelegenen Abschnitt des Endlossiebbandes zu gewährleisten.

Aus der Anmeldung JP 2002-294666 ist eine vergleichbare Siebvorrichtung der Bauart "querdurchströmt" bekannt. Sie umfasst Siebfelder mit Siebfeldrahmen, die mit Siebnetzen bespannt sind und beidseitig jeweils mit zwei hintereinander liegenden Ketten geführt werden. Der Abstand der jeweils beiden Ketten zueinander ändert sich entlang des Umlaufweges des Endlossiebbandes. Im stromaufwärts liegenden vorderen Abschnitt des Siebbandes ist der Abstand der Ketten klein und die nebeneinander liegenden Siebfelder bilden in der Strömung eine gemeinsame geschlossene Siebfläche. Im stromabwärts liegenden hinteren Abschnitt des Endlossiebbandes ist der Abstand der Ketten groß, wodurch die Siebfelder in eine Offenstellung geschwenkt sind, in der sich zwischen benachbarten Siebfeldern jeweils eine den Strömungsquerschnitt freigebende Öffnung bildet, durch die die Flüssigkeit die verschwenkten Siebfelder umströmen kann. Auch hier entfallen bauliche Maßnahmen zum Umlenken des Flüssigkeitsstromes und die Siebfelder werden dennoch im Wesentlichen nur einmal durchströmt, sodass der Gesamtdruckverlust vorteilhaft gering bleibt. Der Aufbau des Endlossiebbandes ist jedoch kompliziert und es ist Aufwand erforderlich, um die Dichtheit der geschlossenen Siebfelder im vorderen, stromaufwärts gelegenen Abschnitt des Endlossiebbandes zu gewährleisten.

Ferner haben die bekannten querdurchströmten Ausführungsformen den Nachteil, dass durch die von der Schmutzwasser- zur Reinwasserseite umlaufenden Siebfelder ein Teil der daran haften bleibenden Schmutzfracht von der Schmutzwasser- zur Reinwasserseite übertragen wird, was zur Verschmutzung der Reinwasserseite führt. Bei den Ausführungsformen "innen-außen" und "außen-innen" ist dies ausgeschlossen.

Um nur den für den Reinigungseffekt unumgänglichen Druckverlust nur jeweils eines durchströmten Siebfeldes in Kauf nehmen zu müssen, wird in den bekannten Siebvorrichtungen der Bauartvarianten "von außen nach innen" und "von innen nach außen" der Flüssigkeitsstrom durch bauliche Maßnahmen geteilt und jeweils etwa hälftig um ca. 90 Winkelgrade nach links bzw. nach rechts umgelenkt. Bei den Bauartvarianten "außen nach innen" und "von innen nach außen" sind die Siebfelder entlang der Strömungsrichtung des Gerinnes angeordnet. Das Endlossiebband wird in diesem Fall so in den Flüssigkeitsstrom eingetaucht, dass die Siebfelder längs der ursprünglichen Fließrichtung des Flüssigkeitsstroms ausgerichtet sind. Eine Hälfte des geteilten Flüssigkeitsstroms wird dann nach links durch den linken Abschnitt des Endlossiebbandes und die andere Hälfte des Flüssigkeitsstroms nach rechts durch den rechten Abschnitt des Endlossiebbandes geleitet. Nach der Durchströmung des Endlossiebbandes werden die beiden Hälften des Flüssigkeitsstroms wieder umgelenkt und zusammengeführt.

Dabei kann der Flüssigkeitsstrom vom Inneren des Endlossiebbandes durch dieses hindurch nach außen strömen oder umgekehrt. Entsprechend bezeichnet man diese Ausführungsformen auch als "von innen nach außen" oder als "von außen nach innen". Bei der Bauart "von außen nach innen" ist die Schmutzwasserseite jeweils die Außenseite der sich aufwärts und abwärts bewegenden Abschnitte und die Reinwasserseite ist der Innenraum zwischen den beiden Abschnitten, bei der Bauart "von innen nach außen" ist dies umgekehrt. Dem Vorteil, dass der Flüssigkeitsstrom das Endlossiebband so nur einmal durchströmt und dadurch nur ein entsprechend kleinerer Druckverlust zu verzeichnen ist, steht allerdings der Nachteil von aufwendigen und teuren baulichen Maßnahmen gegenüber. Außerdem entstehen durch die Strömungsumlenkungen erhebliche Strömungsturbulenzen, was zur Leistungsminderung der Durchsatzmenge oder zur Vergrößerung der Vorrichtung führt, beispielsweise durch einen größeren erforderlichen Abstand einer stromabwärts folgenden Pumpe, die in einer wirbelarmen Zone arbeiten sollte. Darüber hinaus bedingt die zweifache Umlenkung des Flüssigkeitsstroms eine unverhältnismäßig große Einbaulänge in Richtung der Gesamtfließrichtung, die oft gar nicht oder nur unter Inkaufnahme von erheblichen Mehrkosten zur Verfügung steht.

Die "querdurchströmten" Ausführungsformen nach dem Stand der Technik weisen den Nachteil auf, dass sich durch Sedimentationsprozesse im Bereich zwischen den Siebfeldern Schmutz an der Kanalsohle ansammelt und mit der Zeit den Lauf der Siebfelder beeinträchtigen kann.

Die Erfindung geht aus von der Bauart "querdurchströmt", d.h. von einer Siebbandmaschine, bei der der siebaktive Abschnitt des Endlossiebbandes zumindest annähernd oder im Wesentlichen quer zur Fließrichtung des Flüssigkeitsstroms in dem Gerinne ausgerichtet ist. Ausgehend von diesem Stand der Technik liegt der Erfindung die Aufgabe zugrunde, eine Siebbandmaschine der eingangs genannten Art zu schaffen, die einen möglichst geringen Druckverlust im Flüssigkeitsstrom mit einer, in Fließrichtung gesehen, möglichst geringen Baulänge der Vorrichtung, und einem einfachen Aufbau des Endlossiebbandes kombiniert, das "Verschleppen" von Schmutzfracht von der Schmutzwasser- zur Reinwasserseite vermeidet, bleibende Ablagerungen auf dem Kanalgrund reduziert und eine bedarfsgerechte Schmutzabtrennung vom Endlossiebband ermöglicht.

Diese Aufgabe wird erfindungsgemäß durch eine Siebbandmaschine mit den Merkmalen der beigefügten unabhängigen Ansprüche gelöst. Bevorzugte Ausgestaltungen und Weiterbildungen der Erfindung ergeben sich aus den abhängigen Ansprüchen und der nachfolgenden Beschreibung mit zugehörigen Zeichnungen.

Eine erfindungsgemäße Siebbandmaschine zum mechanischen Abscheiden und Herausfördern von festen Bestandteilen, Festkörpern oder Feststoffen aus einem in einem Gerinne fließenden Flüssigkeitsstrom, insbesondere ein Sieb- oder Filterrechen für Prozess-, Kühl- oder Abwasserströmungen oder für Klär- oder Wasserkraftanlagen oder für den Einsatz in einem wasserführenden Kanal eines Kühlwasser-Einlaufbauwerkes eines Kraftwerks, mit einem in einer Bewegungsrichtung umlaufenden, in den Flüssigkeitsstrom eintauchenden Endlossiebband, das in einem siebaktiven Abschnitt des Endlossiebbandes, der in dem Flüssigkeitsstrom angeordnet ist, eine Siebfläche in dem Gerinne bildet, wobei der siebaktive Abschnitt des Endlossiebbandes zumindest annähernd oder im Wesentlichen quer zur Strömungsrichtung des Flüssigkeitsstroms in dem Gerinne ausgerichtet ist, und mit einer Antriebsvorrichtung zum Antreiben des Endlossiebbandes in seiner Bewegungsrichtung, weist also die Besonderheit auf, dass das Endlossiebband als in quer zu seiner Bewegungsrichtung flexibel zusammenfaltbares, zusammenstauchbares oder zusammenbiegbares Endlossiebband ausgebildet ist, das in dem siebaktiven, in dem Flüssigkeitsstrom angeordneten Abschnitt entfaltet ist, und in einem Stauchabschnitt, der gegenüber dem siebaktiven Abschnitt stromaufwärts in dem Flüssigkeitsstrom angeordnet ist, quer zu seiner Bewegungsrichtung zusammengefaltet, zusammengestaucht oder zusammengebogen ist.

Ein erfindungsgemäßes Verfahren zum mechanischen Abscheiden und Herausfördern von festen Bestandteilen, Festkörpern oder Feststoffen aus einem in einem Gerinne fließenden Flüssigkeitsstrom mit einer Siebbandmaschine, insbesondere einem Sieb- oder Filterrechen für Prozess-, Kühloder Abwasserströmungen oder für Klär- oder Wasserkraftanlagen oder für den Einsatz in einem wasserführenden Kanal eines Kühlwasser-Einlaufbauwerkes eines Kraftwerks, mit einem in einer Bewegungsrichtung umlaufenden, in den Flüssigkeitsstrom eintauchenden Endlossiebband, das in einem siebaktiven Abschnitt des Endlossiebbandes, der in dem Flüssigkeitsstrom angeordnet ist, eine Siebfläche in dem Gerinne bildet, wobei der siebaktive Abschnitt des Endlossiebbandes zumindest annähernd oder im Wesentlichen quer zur Strömungsrichtung des Flüssigkeitsstroms in dem Gerinne ausgerichtet ist, und einer Antriebsvorrichtung zum Antreiben des Endlossiebbandes in seiner Bewegungsrichtung, weist die Besonderheit auf, dass ein Endlossiebband verwendet wird, das als in quer zu seiner Bewegungsrichtung flexibel zusammenfaltbares, zusammenstauchbares oder zusammenbiegbares Endlossiebband ausgebildet ist, und das Endlossiebband in dem siebaktiven, in dem Flüssigkeitsstrom angeordneten Abschnitt entfaltet wird und in einem Stauchabschnitt, der gegenüber dem siebaktiven Abschnitt stromaufwärts in dem Flüssigkeitsstrom angeordnet ist, quer zu seiner Bewegungsrichtung zusammengefaltet, zusammengestaucht oder zusammengebogen wird.

Das Endlossiebband kann somit bei seinem Umlauf in der Siebbandmaschine quer zur Strömungsrichtung des Flüssigkeitsstroms zusammengefaltet, zusammengestaucht oder zusammengebogen werden, wodurch sich seine links und rechts außen verlaufenden Ränder zueinander annähern können und sich damit die Querausdehnung des Endlossiebbandes quer zu seiner Bewegungsrichtung und quer zur Strömungsrichtung verringern kann. Im Rahmen der Erfindung hat sich gezeigt, dass diese Eigenschaft vorteilhaft genutzt werden kann, um die Vorteile von Siebbandmaschinen der Ausführungsformen "von außen nach innen" bzw. "von innen nach außen" auch bei Varianten des Typs "querdurchströmt" zu nutzen, ohne deren Nachteile in Kauf zu nehmen.

Die Erfindung wird nachfolgend anhand eines in den Figuren dargestellten Ausführungsbeispiels näher erläutert. Die darin beschriebenen Besonderheiten können einzeln oder in Kombination miteinander eingesetzt werden, um bevorzugte Ausgestaltungen der Erfindung zu schaffen. Es zeigen:
- Figur 1: eine Seitenansicht einer erfindungsgemäßen Siebbandmaschine,
- Figur 2: einen horizontalen Schnitt B-B zu Figur 1,
- Figur 3: eine Einzelheit X zu Figur 2,
- Figur 4: eine Schnittansicht A-A zu Figur 1 und
- Figur 5: einen horizontalen Schnitt C-C zu Figur 1.

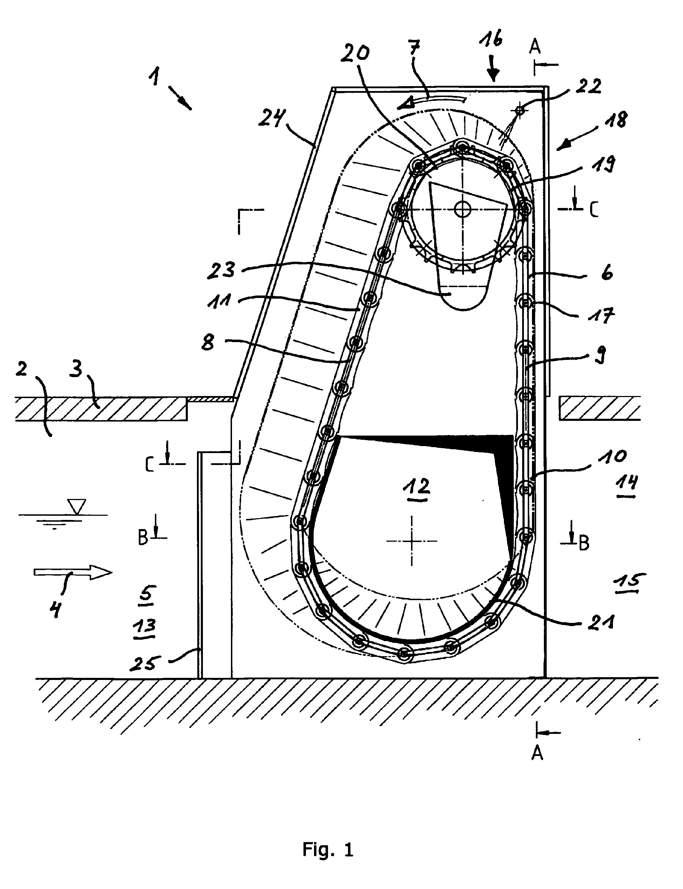

Die Figur 1 zeigt in einer Seitenansicht eine Siebbandmaschine 1 zum mechanischen Abscheiden und Herausfördern von festen Bestandteilen, Festkörpern oder Feststoffen aus einem in einem Gerinne fließenden Flüssigkeitsstrom. Eine solche Siebbandmaschine 1 ist beispielsweise ein Sieb- oder Filterrechen für Prozess-, Kühl- oder Abwasserströmungen oder für Klär- oder Wasserkraftanlagen oder für den Einsatz in einem wasserführenden Kanal 2 eines Kühlwasser-Einlaufbauwerkes 3 eines Kraftwerks, einer petrochemischen oder Meerwasserentsalzungsanlage, eines Stahlwerkes oder einer sonstigen Industrieanlage. Der Siebung kommt als letzter Reinigungsstufe im Wassereinlauf eine besondere Bedeutung zu, denn nachgeschaltete Anlagen wie Pumpen und Kondensatoren müssen zuverlässig gegen Störungen durch im Wasser enthaltene feste Bestandteile geschützt werden, die durch die Siebbandmaschine 1 abgeschieden werden.

Derartige Siebbandmaschinen 1 ermöglichen eine hohe Durchsatzleistung von typischerweise bis 100.000 m³/h bei geringstem Bauvolumen. Typische Auslegungswerte sind: Maschinenlänge (in Strömungsrichtung 4) 1,0 - 4,5 m, Kanalbreite (quer zur Strömungsrichtung 4) 2,5 - 7,0 m, Kammertiefe bis 20 m, Bauhöhe über Flur 1,6 - 2,2 m und Maschenweite des Siebs 0,2 - 10 mm.

In der Seitenansicht von Figur 1 ähnelt die erfindungsgemäße Siebbandmaschine 1 einer Siebbandmaschine der Bauart "querdurchströmt" nach dem Stand der Technik, umfasst jedoch statt einer Mehrzahl von Siebfeldern, die ein umlaufendes, in den Flüssigkeitsstrom 5 eintauchendes Endlossiebband 6 bilden, in dem mehrere in Bewegungsrichtung 7 des Endlossiebbandes 6 aufeinanderfolgende, nebeneinander angeordnete Siebfelder sowohl in dem sich abwärts bewegenden Abschnitt 8 des Endlossiebbandes 6 als auch dem sich aufwärts bewegenden Abschnitt 9 des Endlossiebbandes 6 jeweils eine gemeinsame Siebfläche in dem Kanal 2 bzw. Flüssigkeitsstrom 5 bilden, ein Endlossiebband 6, das als in quer zu seiner Bewegungsrichtung 7 flexibel zusammenfaltbares, zusammenstauchbares oder zusammenbiegbares Endlossiebband ausgebildet ist, das in dem siebaktiven Abschnitt 10, der in dem Flüssigkeitsstrom 5 angeordnet ist, entfaltet ist, und in einem Stauchabschnitt 11, der gegenüber dem siebaktiven Abschnitt 10 quer zu seiner Bewegungsrichtung 7 zusammengefaltet, zusammengestaucht oder zusammengebogen ist.

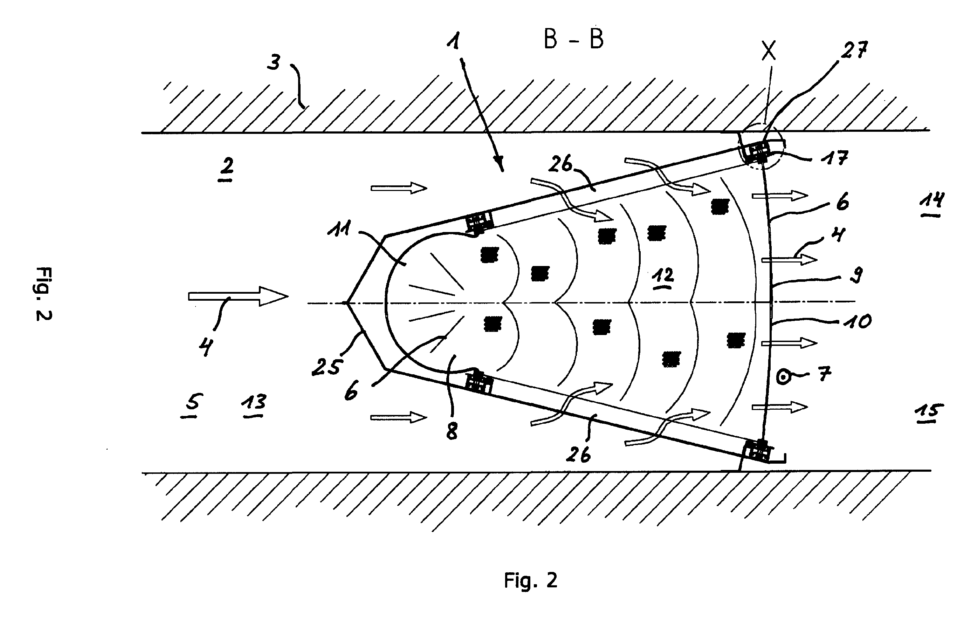

Unter einem siebaktiven Abschnitt 10 des Endlossiebbandes 6 wird dabei ein Abschnitt des Endlossiebbandes 6 verstanden, der in den Flüssigkeitsstrom 5 eintaucht und dabei von dem Flüssigkeitsstrom 5 durchströmt wird, sodass er zur Filterwirkung der Siebbandmaschine 1 beiträgt. Der siebaktive Abschnitt 10 ist somit ein Teil des stromabwärts angeordneten Abschnitts des Endlossiebbandes 6. Dem gegenüber ist der Stauchabschnitt 11 des Endlossiebbandes 6 bevorzugt im Wesentlichen siebinaktiv, d.h. er wird nicht oder nur zu einem geringen Anteil vom Flüssigkeitsstrom 5 durchströmt und trägt somit nicht oder nur zu einem geringen Anteil zur Filterwirkung der Siebbandmaschine 1 bei. Die Siebwirkung wird also im Wesentlichen oder vollständig von dem siebaktiven Abschnitt 10 erzielt. Dies wird weiter unten im Zusammenhang mit Fig. 2 erläutert. Die Bewegungsrichtung 7 des siebaktiven Abschnitts 10 kann prinzipiell nach oben oder nach unten gerichtet sein. Bevorzugt ist die in Fig. 1 dargestellte Ausführungsform, in der die Bewegungsrichtung des siebaktiven Abschnitts 10 nach oben, d.h. aus dem Flüssigkeitsstrom 5 heraus, und die des Stauchabschnitts 11 nach unten, d.h. in den Flüssigkeitsstrom 5 hinein gerichtet ist. Hierdurch wird ermöglicht, dass der in dem siebaktiven Abschnitt 10 von dem Endlossiebband 6 aus dem Flüssigkeitsstrom 5 herausgefilterte Schmutz von dem Endlossiebband 6 nach oben gefördert werden kann, ohne dass das Endlossiebband 6 dabei in seiner Querrichtung zusammengefaltet, zusammengestaucht oder zusammengebogen wird und dabei der Schmutz abfällt oder das Endlossiebband 6 beschädigt. Hierzu ist vorteilhafterweise die Führung des Endlossiebbandes 6 auf seinem stromabwärts gelegenen, aufwärts bewegten Abschnitt 9 derart ausgebildet, dass das Endlossiebband 6 in diesem Bereich bewegt wird, ohne dass es dabei quer zu seiner Bewegungsrichtung 7 zusammengefaltet, zusammengestaucht oder zusammengebogen wird bzw. in diesem Abschnitt 9 im Wesentlichen in einer gleichen Breite geführt wird.

Die Strömungsrichtung 4 durch den siebaktiven Abschnitt 10 des Endlossiebbandes 6 ist von der Innenseite 12 des Endlossiebbandes 6 zu der Außenseite 14 des Endlossiebbandes 6 gerichtet. Dementsprechend ist die Innenseite 12 des Endlossiebbandes 6 die Schmutzwasserseite 13 und die Außenseite 14 des Endlossiebbandes 6 die Reinwasserseite 15, des Endlossiebbandes 6 und der Siebbandmaschine 1.

Der siebaktive Abschnitt 10 wird auf der Schmutzwasserseite 13 mit dem zu reinigenden Wasser angeströmt, der Schmutz setzt sich auf der Innenseite des Endlossiebbandes 6 auf dem siebaktiven Abschnitt 10 ab und das gesiebte bzw. gefilterte Wasser tritt auf der Reinwasserseite 15 aus. Der in dem siebaktiven Abschnitt 10 aufgefangene Schmutz wird durch die Umlaufbewegung des Endlossiebbandes 6 in der Bewegungsrichtung 7 mit dem aufwärts bewegten Abschnitt 9 aus dem Flüssigkeitsstrom 5 herausgehoben und zu einem Reinigungsbereich 16 gefördert, wo er von dem Endlossiebband 6 abgetrennt wird.

Zum Ermöglichen der Umlaufbewegung des Endlossiebbandes 6 ist es mit einem Zugmittel oder Fördermittel verbunden, bei dem es sich in der Regel um zwei wartungsfreie, jeweils an einer Außenseite des Endlossiebbandes 6 verlaufende Laschenketten 17 handelt. Die Ketten 17 werden in in dem Bauwerk 3 verankerten Führungen geführt, wobei die erforderliche Abdichtung vorgesehen ist, um sicherzustellen, dass das Wasser den siebaktiven Abschnitt 10 durchströmt und nicht umströmt.

Zum Antreiben des Endlossiebbandes 6 in seiner Bewegungsrichtung 7 dient eine Antriebsvorrichtung 18 mit mindestens einem Antriebsmotor und mindestens einem Kettenrad 19. Der Antriebsmotor kann eine oder beide Ketten 17 antreiben. Durch eine variable Geschwindigkeit des Endlossiebbandes 6 kann eine optimale Anpassung von Wasserdurchfluss und Siebbandabreinigung erreicht werden. Zum Korrosionsschutz von Ketten 17 und Kettenführungen, insbesondere bei der Beanspruchung durch Seewasser, können Spezialanoden als Teil eines kathodischen Korrosionsschutzes eingebaut werden. Das Endlossiebband 6 wird im oberen Bereich um eine obere Umlenkung 20, die durch das Kettenrad 19 bereitgestellt wird, umgelenkt. Im unteren Bereich wird das Endlossiebband 6 um eine untere Umlenkung 21 umgelenkt, die beispielsweise durch einen Umlenkbogen bereitgestellt wird.

Der Umlenkradius der oberen Umlenkung 20 und der unteren Umlenkung 21 können verschieden sein. Wie in Fig. 1 dargestellt, ist bevorzugt der Radius der unteren Umlenkung 21 größer als der Radius der oberen Umlenkung 20. Die obere und die untere Umlenkung können als Kreisbögen ausgebildet sein, insbesondere die obere Umlenkung 20, die durch ein oder mehrere Kettenräder 19 zum Antreiben des Endlossiebbandes 6 gebildet wird. Es können aber auch von einem Kreisbogen abweichende Umlenkbögen realisiert werden.

Um eine Verschmutzung der Kanalsohle zu vermeiden oder einen möglichst großen, d.h. möglichst weit bis zur Kanalsohle reichenden siebaktiven Abschnitt 10 zu realisieren, kann ferner vorteilhafterweise vorgesehen sein, dass der Scheitelpunkt der Umlenkung des unteren, stromabwärts gelegenen Abschnitts 9 des Endlossiebbandes 6 tiefer angeordnet ist als der Scheitelpunkt der Umlenkung des unteren, stromaufwärts gelegenen Abschnitts 8 des Endlossiebbandes 6. Bei dieser Ausführungsform befinden sich somit die Scheitelpunkte der Umlenkungen der unteren, stromabwärts und stromaufwärts liegende Abschnitte des Endlossiebbandes 6 auf unterschiedlicher Höhe über dem Kanalgrund.

Bei einer erfindungsgemäßen Siebbandmaschine 1 setzt sich der aus dem Flüssigkeitsstrom 5 abgeschiedene Schmutz nicht wie bei einer querdurchströmten Siebbandmaschine nach dem Stand der Technik auf der Außenseite 14 des Endlossiebbandes 6, sondern auf der Innenseite 12 des Endlossiebbandes 6 ab und wird demzufolge mittels einer von außen einwirkenden Reinigungsvorrichtung von außen nach innen abgesprüht. Eine erfindungsgemäße Siebbandmaschine 1 umfasst also bevorzugt eine Reinigungsvorrichtung zum Reinigen eines aus dem Flüssigkeitsstrom 5 herausgehobenen Abschnitts des Endlossiebbandes 6 in einem Reinigungsbereich 16 der Siebbandmaschine 1 auf der Außenseite 14 des Endlossiebbandes 6 angeordnete Sprühdüsen 22 oder Druckluftdüsen sowie eine auf der den Sprühdüsen 22 oder Druckluftdüsen gegenüberliegenden Innenseite 12 des Endlossiebbandes 6 angeordnete Schmutzsammelrinne 23 zum Auffangen von dem Endlossiebband 6 abgesprühten Schmutzes. Diese Reinigungsvorrichtung wird vorteilhafterweise im Bereich der oberen Umlenkung 20 des Endlossiebbandes 6 angeordnet.

Die Schmutzfracht wird an der Innenseite 12 des aufwärts fahrenden, stromabwärts gelegenen Abschnitts 9 des Endlossiebbandes 6 haftend auf Bedienflurhöhe zum Reinigungsbereich 16 transportiert. Gröbere Teile fallen direkt durch bloße Einwirkung der Schwerkraft in die Schmutzsammelrinne 23, die auch als Schmutzwassersammelrinne bezeichnet wird. Durch die Abspritzung mit den Sprühdüsen 22 erfolgt eine intensive Reinigung des Endlossiebbandes 6.

Wenn bei der Reinigung des Endlossiebbandes 6 hartnäckige Verschmutzungen an dem Endlossiebband 6 haften bleiben, so bleiben sie im Inneren 12 des Endlossiebbandes 6, wo sie aufgrund der Umlaufbewegung des Endlossiebbandes 6 beim wiederholten Passieren der Abspritzung im Reinigungsbereich 16 schließlich zuverlässig entfernt werden. Gröbere Sedimente, Rollstoffe und schwimmende Teile gelangen ebenso zwangsläufig in den Innenbereich 12 der Siebbandmaschine 1 und werden von dort entfernt. Verschmutzungen der Sohle des Kanals 2 und der bei anderen Strömungsmustern oft beobachtete Übertragungseffekt von Schmutzfracht auf die Reinwasserseite sind somit ausgeschlossen.

Der Abspritzeinrichtung mit den Sprühdüsen 22 oder der gesamte obere Kopf der Siebbandmaschine 1 ist mit einer Abdeckung 24 abgedeckt. Die Abspritzung des Endlossiebbandes ist von außen steuerbar. Es kann eine manuelle oder automatische Spritzdüsen-Reinigungsvorrichtung vorgesehen sein.

Die Figur 2 zeigt einen horizontalen Schnitt B-B der Siebbandmaschine 1 von Figur 1. Das in der Strömungsrichtung 4 von innen nach außen durchströmte Endlossiebband 6 bzw. der durchströmte siebaktive Abschnitt 10 ist im Wesentlichen quer zur Strömungsrichtung 4 (Fließrichtung im Kanal 2) des Wassers eingebaut, mit der offenen Seite bzw. Einlaßseite der Siebbandmaschine 1 zum anströmenden Fluss hin. Die Strömungsrichtung ist also in dem stromabwärts angeordneten, siebaktiven Abschnitt 10 von der Innenseite 12 des Endlossiebbandes 6 durch das Endlossiebband 6 zu der Außenseite 14 des Endlossiebbandes 6 gerichtet.

Dabei ist der stromaufwärts angeordnete Stauchabschnitt 11 des Endlossiebbandes bevorzugt siebinaktiv, d.h. er wird nicht vom Flüssigkeitsstrom 5 durchströmt bzw. trägt nicht zur Siebwirkung der Siebbandmaschine 1 bei. Dies kann beispielsweise durch eine besondere Gestaltung des Endlossiebbandes 6, das in dem Stauchbereich 11 quer zu seiner Bewegungsrichtung 7 zusammengefaltet, zusammengestaucht oder zusammengebogen ist, bewirkt werden. Gemäß einer bevorzugten, in Figur 2 dargestellten Ausführungsform weist die Siebbandmaschine 1 eine in dem Flüssigkeitsstrom 5 stromaufwärts von dem Stauchabschnitt 11 angeordnete Anströmnase 25 auf, in deren Strömungsschatten der Stauchabschnitt 11 des Endlossiebbandes 6 angeordnet ist.

Durch die Anströmnase 25 wird der anströmende Flüssigkeitsstrom 5 geteilt und jeweils etwa hälftig quer nach links bzw. nach rechts umgelenkt und um den Stauchabschnitt 11 herumgeführt. Die Siebbandmaschine 1 weist zwischen dem Stauchabschnitt 11 und dem siebaktiven Abschnitt 10 des Endlossiebbandes 6 angeordnete Anströmöffnungen 26 auf, durch die der geteilte Flüssigkeitsstrom 5 in das Innere 12 der Siebbandmaschine 1 einströmen kann. Die Anströmöffnungen 26 sind beidseitig der Siebbandmaschine 1 zwischen der Anströmnase 25 und dem siebaktiven Abschnitt 10 angeordnet und werden schräg durchströmt. Nach der Durchströmung der Anströmöffnungen 26 werden die beiden Hälften des Flüssigkeitsstroms 5 wieder in der Innenseite 12 der Siebbandmaschine 1 zusammengeführt und strömen, längs der ursprünglichen Fließrichtung des Flüssigkeitsstroms 5 ausgerichtet, zu dem siebaktiven Abschnitt 10.

Der Flüssigkeitsstrom 5 durchströmt das Endlossiebband 6 nur einmal, was in einem vorteilhaft niedrigen Druckverlust resultiert. Zu dem niedrigen Druckverlust trägt auch bei, dass die Strömung im Bereich der Anströmöffnungen 26 nur wenig und nicht etwa um 90 Grad umgelenkt wird. Ferner ist in dieser Hinsicht vorteilhaft, dass die Umlenkung der Strömung nicht im Bereich des siebaktiven Abschnitts 10, sondern weit stromaufwärts davon erfolgt. Hierdurch wird die strömungswiderstandserhöhende Bildung von Wirbeln an der Oberfläche des siebaktiven Abschnitts 10 verhindert. Die Anströmnase 25 kann strömungsgünstig gestaltet werden, sodass sie keine großen Kräfte aufnehmen muss. Da auch der Stauchabschnitt 11 keinen großen Kräften ausgesetzt ist, wird ein wirtschaftlicher Vorteil durch Einsparungen bei den Bauwerkskosten erzielt.

Die Siebbandmaschine 1 hat jedoch nicht nur Vorteile hinsichtlich eines geringen Druckverlustes, sondern vermeidet auch das Problem der Schmutzübertragung von der Schmutzwasserseite 13 zur Reinwasserseite 15.

Eine weitere vorteilhafte Ausgestaltung der Siebbandmaschine 1 besteht darin, dass der siebaktive Abschnitt 10 auf seiner stromabwärts gelegenen Seite nur durch eine an seinen beiden Rändern verlaufende Führung 27 gehalten wird, sodass er sich in Strömungsrichtung 4 wölben oder durchbiegen kann. Die Führung 27 verläuft bevorzugt im Wesentlichen senkrecht. Wenn der siebaktive Abschnitt 10 bzw. der stromabwärts liegende, aufwärts bewegte Abschnitt 9 des Endlossiebbandes 6 derart geführt wird, dass eine Durchbiegung des Endlossiebbandes 6 in Strömungsrichtung 4 ermöglicht wird, entfällt im Gegensatz zu den nach dem Stand der Technik bekannten querdurchströmten Ausführungsformen das Erfordernis, auf der stromabwärts gelegenen Seite des siebaktiven Abschnitts 10 eine diesen abstützende Stützkonstruktion, z.B. U-Schienen und Stahlträger, vorzusehen, um die Kräfte aufzunehmen, die durch den siebaktiven Abschnitt 10 in dem Flüssigkeitsstrom 5 verursacht werden. Die Siebbandmaschine 1 kann also sehr kostengünstig aufgebaut sein, wenn sich der siebaktive Abschnitt 10 durchbiegen kann.

In Figur 2 ist gut zu erkennen, dass das Endlossiebband 6 in dem abwärts bewegten Abschnitt 8 gegenüber dem aufwärts bewegten Abschnitt 9 quer zu seiner Bewegungsrichtung 7 zusammengefaltet, zusammengestaucht oder zusammengebogen ist, sodass der Flüssigkeitsstrom 5 daran vorbeiströmen kann. Hierzu kann das Endlossiebband 6 beispielsweise eine Falt-, Walk- oder Biegebewegung durchführen. Vorteilhafterweise kann vorgesehen sein, dass das Verhältnis der Quererstreckung des Endlossiebbandes 6 in dem siebaktiven Abschnitt 10 zu der Quererstreckung des Endlossiebbandes 6 in dem Stauchabschnitt 11 zwischen 3:1 und 1,1:1, bevorzugt zwischen 2,5:1 und 1,5:1 beträgt. Durch diese Bereiche wird sichergestellt, dass neben dem Stauchabschnitt 11 ausreichend Platz für das Vorbeiströmen des Flüssigkeitsstroms 5 verbleibt, ohne dass dabei das Endlossiebband 6 zu stark durch Zusammenfalten bzw. Zusammenstauchen oder Zusammenbiegen beansprucht wird.

Das Endlossiebband 6 kann aus jedem hierzu geeigneten Material aufgebaut sein. Eine erste vorteilhafte Ausführungsform kann beispielsweise ein flexibles, perforiertes Kunststoffband sein, beispielsweise aus PU oder PE, das ggf. eine Kevlar-Sandwich-Verstärkung aufweist. Eine andere vorteilhafte Ausführungsform eines Endlossiebbandes 6 ist ein Gewebeband, beispielsweise aus Metall, Kunststoff oder Kevlar. Eine weitere mögliche Ausführungsform kann ein Gliederkettenband sein. Im Unterschied zu konventionellen Endlossiebbändern bekannter Siebbandmaschinen nach dem Stand der Technik, die eine Anzahl verketteter Siebfelder aufweisen, besteht das Endlossiebband 6 einer erfindungsgemäßen Siebbandmaschine bevorzugt aus einem Bandmaterial, durch das die Siebung bzw. Filterung direkt bewirkt wird, ohne dass darin Siebfelder oder Siebfeldeinsätze angeordnet sind.

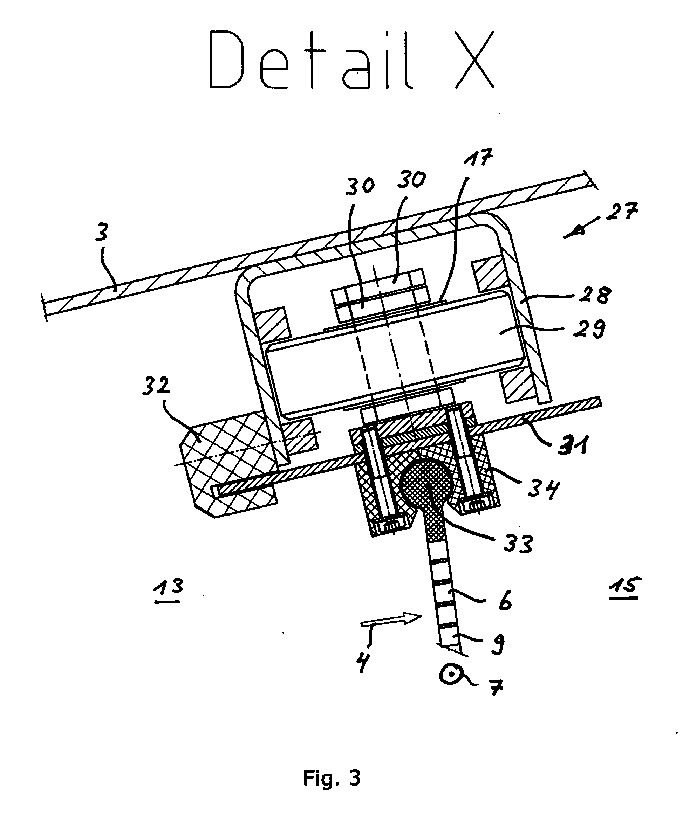

Die Figur 3 zeigt in einer Einzelheit von Figur 2 die Führung 27 des siebaktiven Abschnitts 10 im Bauwerk 3. Sie umfasst ein U-Profil 28 zum Führen der Rollen 29 einer Laschenkette 17 mit Kettenlaschen 30 und einem an der Laschenkette 17 angebrachten Dichtblech 31. Das Dichtblech 31 wird in einer Dichtleiste 32 geführt, die an dem U-Profil 28 angebracht ist. Die Laschenkette 17 mit dem Dichtblech 31 und die Dichtleiste 32 bilden die Abdichtung zum U-Profil 28 der Kettenführung 27. Dadurch wird ein Beipass von der Schmutzwasserseite 13 zur Reinwasserseite 15 verhindert. Das Endlossiebband 6 weist an seinem Außenrand eine Verdickung 33 auf, die in einer Aufnahme 34 gelenkig geführt ist, die mit der Laschenkette 17 verbunden ist.

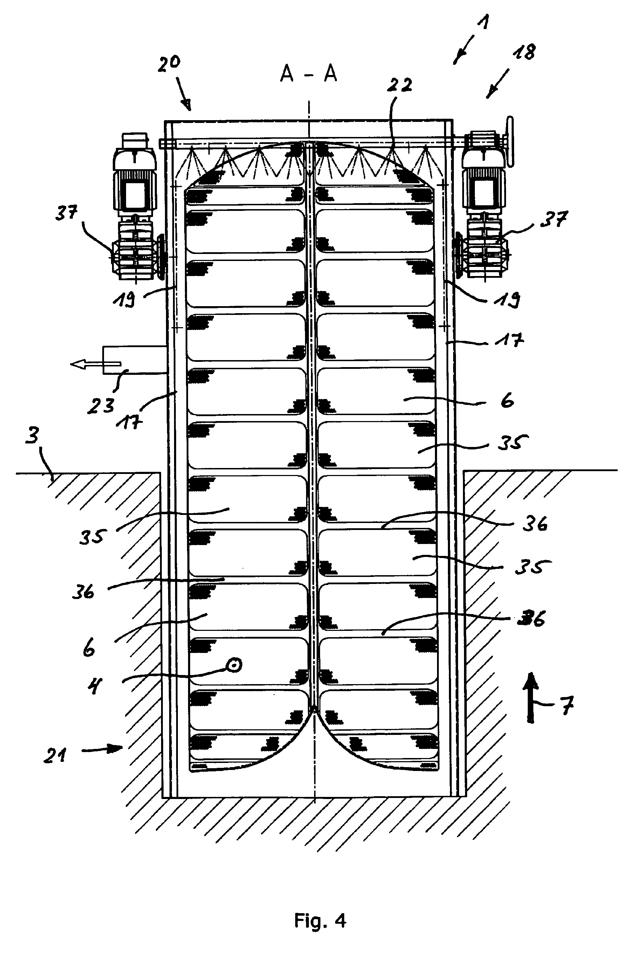

Die Figur 4 zeigt eine Schnittansicht A-A zu Figur 1. Man sieht hier auf die Reinwasserseite 15 des Endlossiebbandes 6. Das Endlossiebband 6 weist perforierte Bereiche 35 auf, durch die das Wasser strömt, wobei die Schmutzfracht herausgesiebt wird. Zwischen den perforierten Bereichen 35 sind in dem Endlossiebband 6 nicht perforierte Zwischenstege 36 vorgesehen, die der Zugkrafteinleitung in die Ketten 17 dienen. Die Zugkraft entsteht durch Wölben bzw. Durchbiegen des Endlossiebbandes 6 beim Durchströmen des siebaktiven Abschnitts 10.

In der Figur 4 befinden sich hinter dem siebaktiven Abschnitt 10 des Endlossiebbandes 6 und von diesem in der Figur verdeckt die Anströmöffnungen 26, durch die der Flüssigkeitsstrom 5 in das Innere 12 der Siebbandmaschine 1 einströmen kann. Im Bereich der oberen Umlenkung 20 sind die links und rechts angeordneten Kettenräder 19 und die zwei zugehörigen Antriebe 37 zu erkennen.

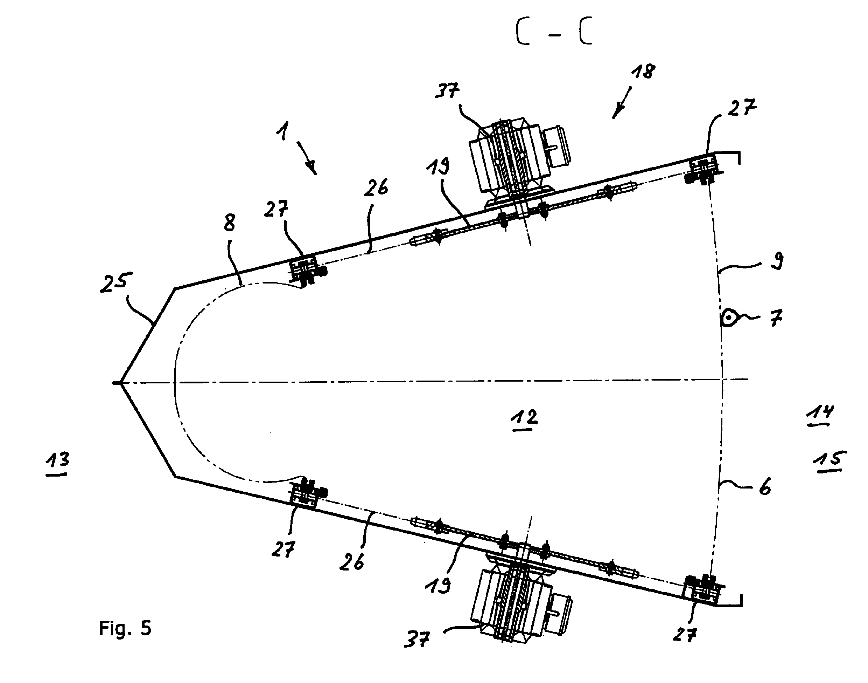

Die Figur 5 zeigt in einem horizontalen Schnitt C-C zu Figur 1 diese Antriebe 37 im Detail. Man erkennt, dass die Antriebsvorrichtung 18 zum Antreiben des Endlossiebbandes 6 in seiner Bewegungsrichtung 7 zwei Antriebsräder umfasst, die jeweils auf einer Seite des Endlossiebbandes 6 angeordnet sind, wobei die Antriebsräder in einem Winkel zueinander angeordnet sind, der durch das Verhältnis der Quererstreckung des Endlossiebbandes 6 in dem siebaktiven Abschnitt 10 zu der Quererstreckung des Endlossiebbandes 6 in dem Stauchabschnitt 11 gegeben ist. Die beiden Antriebsräder sind hier als Kettenräder 19 realisiert, die zwei Kettenzüge, jeweils einen links und rechts am Rand des Endlossiebbandes 6, für den Transport des Siebbandes 6 in seiner Bewegungsrichtung 7 antreiben.

Um einen Gleichlauf der beiden Antriebe 37 bzw. der beiden Kettenzüge zu erzielen, können geeignete Maßnahmen vorgesehen sein, beispielsweise eine Kopplung mittels eines Kardangelenks oder eine Frequenzsteuerung mit einer elektronischen Synchronisation der Antriebe 37.

### Bezugszeichenliste

- 1: Siebbandmaschine
- 2: Kanal
- 3: Bauwerk
- 4: Strömungsrichtung
- 5: Flüssigkeitsstrom
- 6: Endlossiebband
- 7: Bewegungsrichtung zu 6
- 8: abwärts bewegter Abschnitt von 6
- 9: aufwärts bewegter Abschnitt von 6
- 10: siebaktiver Abschnitt
- 11: Stauchabschnitt
- 12: Innenseite
- 13: Schmutzwasserseite
- 14: Außenseite
- 15: Reinwasserseite
- 16: Reinigungsbereich
- 17: Kette
- 18: Antriebsvorrichtung
- 19: Kettenrad
- 20: obere Umlenkung
- 21: untere Umlenkung
- 22: Sprühdüse
- 23: Schmutzsammelrinne
- 24: Abdeckung
- 25: Anströmnase
- 26: Anströmöffnung
- 27: Führung
- 28: U-Profil
- 29: Rolle
- 30: Kettenlasche
- 31: Dichtblech
- 32: Dichtleiste
- 33: Verdickung
- 34: Aufnahme
- 35: perforierter Bereich
- 36: Zwischensteg
- 37: Antrieb

## Patentansprüche

1. Siebbandmaschine (1) zum mechanischen Abscheiden und Herausfördern von festen Bestandteilen, Festkörpern oder Feststoffen aus einem in einem Gerinne fließenden Flüssigkeitsstrom (5), insbesondere Sieb- oder Filterrechen für Prozess-, Kühl- oder Abwasserströmungen oder für Klär- oder Wasserkraftanlagen oder für den Einsatz in einem wasserführenden Kanal (2) eines Kühlwasser-Einlaufbauwerkes (3) eines Kraftwerks, mit
einem in einer Bewegungsrichtung (7) umlaufenden, in den Flüssigkeitsstrom (5) eintauchenden Endlossiebband (6), das in einem siebaktiven Abschnitt (10) des Endlossiebbandes (6), der in dem Flüssigkeitsstrom (5) angeordnet ist, eine Siebfläche in dem Gerinne bildet, wobei der siebaktive Abschnitt (10) des Endlossiebbandes (6) zumindest annähernd oder im Wesentlichen quer zur Strömungsrichtung (4) des Flüssigkeitsstroms (5) in dem Gerinne ausgerichtet ist,
und einer Antriebsvorrichtung zum Antreiben des Endlossiebbandes (6) in seiner Bewegungsrichtung (7),
**dadurch gekennzeichnet, dass**
das Endlossiebband (6) als in quer zu seiner Bewegungsrichtung (7) flexibel zusammenfaltbares, zusammenstauchbares oder zusammenbiegbares Endlossiebband (6) ausgebildet ist, das in dem siebaktiven, in dem Flüssigkeitsstrom (5) angeordneten Abschnitt (10) entfaltet ist,
und in einem Stauchabschnitt (11), der gegenüber dem siebaktiven Abschnitt (10) stromaufwärts in dem Flüssigkeitsstrom (5) angeordnet ist, quer zu seiner Bewegungsrichtung (7) zusammengefaltet, zusammengestaucht oder zusammengebogen ist.

2. Siebbandmaschine (1) nach Anspruch 1, **dadurch gekennzeichnet, dass** die Strömungsrichtung (4) in dem siebaktiven Abschnitt (10) von der Innenseite (12) des Endlossiebbandes (6) durch das Endlossiebband (6) zu der Außenseite (14) des Endlossiebbandes (6) gerichtet ist.

3. Siebbandmaschine (1) nach einem der vorhergehenden Ansprüche, **dadurch gekennzeichnet, dass** die Bewegungsrichtung (7) des siebaktiven Abschnitts (10) nach oben und die des Stauchabschnitts (11) nach unten gerichtet ist.

4. Siebbandmaschine (1) nach einem der vorhergehenden Ansprüche, **dadurch gekennzeichnet, dass** der Stauchabschnitt (11) des Endlossiebbandes (6) im Wesentlichen siebinaktiv ist.

5. Siebbandmaschine (1) nach einem der vorhergehenden Ansprüche, **dadurch gekennzeichnet, dass** sie eine in dem Flüssigkeitsstrom (5) stromaufwärts von dem Stauchabschnitt (11) angeordnete Anströmnase (25) aufweist, in deren Strömungsschatten der Stauchabschnitt (11) des Endlossiebbandes (6) angeordnet ist.

6. Siebbandmaschine (1) nach einem der vorhergehenden Ansprüche, **dadurch gekennzeichnet, dass** sie zwischen dem Stauchabschnitt (11) und dem siebaktiven Abschnitt (10) des Endlossiebbandes (6) angeordnete Anströmöffnungen (26) aufweist, durch die der Flüssigkeitsstrom (5) in das Innere (12) der Siebbandmaschine (1) einströmen kann.

7. Siebbandmaschine (1) nach einem der vorhergehenden Ansprüche, **dadurch gekennzeichnet, dass** der siebaktive Abschnitt (10) auf seiner stromabwärts gelegenen Seite nur durch eine an seinen beiden Rändern verlaufende Führung (27) gehalten wird, sodass er sich in Strömungsrichtung (4) wölben oder durchbiegen kann.

8. Siebbandmaschine (1) nach einem der vorhergehenden Ansprüche, **dadurch gekennzeichnet, dass** das Endlossiebband (6) quer zu seiner Bewegungsrichtung (7) zusammenfaltbar, zusammenstauchbar oder zusammenbiegbar ist, indem es eine Falt-, Walk- oder Biegebewegung durchführt.

9. Siebbandmaschine (1) nach einem der vorhergehenden Ansprüche, **dadurch gekennzeichnet, dass** das Verhältnis der Quererstreckung des Endlossiebbandes (6) in dem siebaktiven Abschnitt (10) zu der Quererstreckung des Endlossiebbandes (6) in dem Stauchabschnitt (11) zwischen 3 : 1 und 1,1 : 1, bevorzugt zwischen 2,5 : 1 und 1,5 : 1 beträgt.

10. Siebbandmaschine (1) nach einem der vorhergehenden Ansprüche, **dadurch gekennzeichnet, dass** das Endlossiebband (6) als flexibles, perforiertes Kunststoffband, als Gewebeband oder als Gliederkettenband ausgebildet ist.

11. Siebbandmaschine (1) nach einem der vorhergehenden Ansprüche, **dadurch gekennzeichnet, dass** die Antriebsvorrichtung zum Antreiben des Endlossiebbandes (6) in seiner Bewegungsrichtung (7) zwei Antriebsräder umfasst, die jeweils auf einer Seite des Endlossiebbandes (6) angeordnet sind, wobei die Antriebsräder in einem Winkel zueinander angeordnet sind, der durch das Verhältnis der Quererstreckung des Endlossiebbandes (6) in dem siebaktiven Abschnitt (10) zu der Quererstreckung des Endlossiebbandes (6) in dem Stauchabschnitt (11) gegeben ist.

12. Siebbandmaschine (1) nach einem der vorhergehenden Ansprüche, **dadurch gekennzeichnet, dass** der Scheitelpunkt der Umlenkung des unteren, stromabwärts gelegenen Abschnitts (9) des Endlossiebbandes (6) tiefer angeordnet ist als der Scheitelpunkt der Umlenkung des unteren, stromaufwärts gelegenen Abschnitts (8) des Endlossiebbandes (6).

13. Siebbandmaschine (1) nach einem der vorhergehenden Ansprüche, **dadurch gekennzeichnet, dass** sie auf der Außenseite (14) des Endlossiebbandes (6) angeordnete Sprühdüsen (22) oder Druckluftdüsen sowie eine auf der den Sprühdüsen (22) oder Druckluftdüsen gegenüberliegenden Innenseite (12) des Endlossiebbandes (6) angeordnete Schmutzsammelrinne (23) zum Auffangen von dem Endlossiebband (6) abgesprühten Schmutzes aufweist.

14. Verfahren zum mechanischen Abscheiden und Herausfördern von festen Bestandteilen, Festkörpern oder Feststoffen aus einem in einem Gerinne fließenden Flüssigkeitsstrom (5) mit einer Siebbandmaschine (1), insbesondere einem Sieb- oder Filterrechen für Prozess-, Kühl- oder Abwasserströmungen oder für Klär- oder Wasserkraftanlagen oder für den Einsatz in einem wasserführenden Kanal (2) eines Kühlwasser-Einlaufbauwerkes (3) eines Kraftwerks, mit
einem in einer Bewegungsrichtung (7) umlaufenden, in den Flüssigkeitsstrom (5) eintauchenden Endlossiebband (6), das in einem siebaktiven Abschnitt (10) des Endlossiebbandes (6), der in dem Flüssigkeitsstrom (5) angeordnet ist, eine Siebfläche in dem Gerinne bildet, wobei der siebaktive Abschnitt (10) des Endlossiebbandes (6) zumindest annähernd oder im Wesentlichen quer zur Strömungsrichtung (4) des Flüssigkeitsstroms (5) in dem Gerinne ausgerichtet ist,
und einer Antriebsvorrichtung zum Antreiben des Endlossiebbandes (6) in seiner Bewegungsrichtung (7),
**dadurch gekennzeichnet, dass**
ein Endlossiebband (6) verwendet wird, das als in quer zu seiner Bewegungsrichtung (7) flexibel zusammenfaltbares, zusammenstauchbares oder zusammenbiegbares Endlossiebband (6) ausgebildet ist, und
das Endlossiebband (6) in dem siebaktiven, in dem Flüssigkeitsstrom (5) angeordneten Abschnitt (10) entfaltet wird
und in einem Stauchabschnitt (11), der gegenüber dem siebaktiven Abschnitt (10) stromaufwärts in dem Flüssigkeitsstrom (5) angeordnet ist, quer zu seiner Bewegungsrichtung (7) zusammengefaltet, zusammengestaucht oder zusammengebogen wird.

## Claims

1. A traveling screen machine (1) for mechanically separating and extracting solid components, solid bodies or solid matter from a liquid stream (5) flowing in a sluice channel, in particular a screen or filter rake for process, cooling or effluent streams, or for sewage treatment plants or hydroelectric power plants, or for use in a water-carrying channel (2) of a cooling water intake structure (3) of a power plant, comprising
an endless screen belt (6) immersing into the liquid stream (5) and rotating in a direction of movement (7), forming a screen area in the sluice channel in an active screen section (10) of the endless screen belt (6) arranged in the liquid stream (5), wherein the active screen section (10) of the endless screen belt (6) is at least approximately or essentially aligned transverse to the flow direction (4) of the liquid stream (5) in the sluice channel,
and a drive apparatus for driving the endless screen belt (6) in its direction of movement (7),
**characterized in that**
the endless screen belt (6) is formed as an endless screen belt (6) flexibly foldable, compressible or bendable transverse to its direction of movement (7),
which is spread out in the active screen section (10) arranged in the liquid stream (5),
and is in a folded, compressed or bent state transverse to its direction of movement (7) in a compression section (11) arranged upstream in the liquid stream (5) with respect to the active screen section (10).

2. The traveling screen machine (1) according to claim 1, **characterized in that** the flow direction (4) in the active screen section (10) is from the inside (12) of the endless screen belt (6) through the endless screen belt (6) towards the outside (14) of the endless screen belt (6).

3. The traveling screen machine (1) according to any one of the preceding claims, **characterized in that** the direction of movement (7) of the active screen section (10) is directed upwards and that of the compression section (11) is directed downwards.

4. The traveling screen machine (1) according to any one of the preceding claims, **characterized in that** the compression section (11) of the endless screen belt (6) is essentially not active as a screen.

5. The traveling screen machine (1) according to any one of the preceding claims, **characterized in that** it comprises a deflector (25) arranged in the liquid stream (5) upstream of the compression section (11), the compression section (11) of the endless screen belt (6) being arranged in the wake of the deflector (25).

6. The traveling screen machine (1) according to any one of the preceding claims, **characterized in that** it comprises flow openings (26) between the compression section (11) and the active screen section (10) of the endless screen belt (6), through which the liquid stream (5) can flow into the inside (12) of the traveling screen machine (1).

7. The traveling screen machine (1) according to any one of the preceding claims, **characterized in that** the active screen section (10) is held on its downstream side only by a guide means (27) extending at its both edges so that it can curve or bend in the flow direction (4).

8. The traveling screen machine (1) according to any one of the preceding claims, **characterized in that** the endless screen belt (6) is foldable, compressible or bendable transverse to its direction of movement (7) by performing a folding, flexing or bending movement.

9. The traveling screen machine (1) according to any one of the preceding claims, **characterized in that** the ratio of the transverse extension of the endless screen belt (6) in the active screen section (10) to the transverse extension of the endless screen belt (6) in the compression section (11), is between 3 : 1 and 1.1 : 1, preferably between 2.5 : 1 and 1.5 : 1.

10. The traveling screen machine (1) according to any one of the preceding claims, **characterized in that** the endless screen belt (6) is configured as a flexible, perforated plastic belt, as a woven belt or as a chain-link belt.

11. The traveling screen machine (1) according to any one of the preceding claims, **characterized in that** the drive apparatus for driving the endless screen belt (6) in its direction of movement (7) comprises two drive wheels arranged on either side of the endless screen belt (6), wherein the drive wheels are arranged at an angle with respect to each other, which is determined by the ratio of the transverse extension of the endless screen belt (6) in the active screen section (10) to the transverse extension of the endless screen belt (6) in the compression section (11).

12. The traveling screen machine (1) according to any one of the preceding claims, **characterized in that** the apex of the redirecting means of the bottom, downstream section (9) of the endless screen belt (6) is arranged lower down than the apex of the redirecting means of the bottom, upstream section (8) of the endless screen belt (6).

13. The traveling screen machine (1) according to any one of the preceding claims, **characterized in that** it comprises spray nozzles (22) or compressed air nozzles arranged on the outside (14) of the endless screen belt (6), and a debris collection trough (23) arranged on the inside (12) of the endless screen belt (6) opposite the spray nozzles (22) or compressed air nozzles for collecting debris sprayed off the endless screen belt (6).

14. A method for mechanically separating and extracting solid components, solid bodies or solid matter from a liquid (5) flowing in a sluice channel with a traveling screen machine (1), in particular a screen or filter rake for process, cooling or effluent streams, or for sewage treatment plants or hydroelectric power plants, or for use in a water-carrying channel (2) of a cooling water intake structure (3) of a power plant, comprising
an endless screen belt (6) immersing into the liquid stream (5) and rotating in a direction of movement (7), forming a screen area in the sluice channel in an active screen section (10) of the endless screen belt (6) arranged in the liquid stream (5), wherein the active screen section (10) of the endless screen belt (6) is at least approximately or essentially aligned transverse to the flow direction (4) of the liquid stream (5) in the sluice channel,
and a drive apparatus for driving the endless screen belt (6) in its direction of movement (7),
**characterized in that**
an endless screen belt (6) is used that is an endless screen belt (6) flexibly foldable, compressible or bendable transverse to its direction of movement (7), and
the endless screen belt (6) is spread out in the active screen section (10) arranged in the liquid stream (5),
and is folded, compressed or bent transverse to its direction of movement (7) in a compression section (11) arranged upstream in the liquid stream (5) with respect to the active screen section (10).

## Revendications

1. Machine à bande-tamis (1) pour séparer et extraire mécaniquement des composants solides, corps solides ou matières solides d'un flux liquide (5) s'écoulant dans un caniveau, en particulier grille de tamisage ou de filtration pour des flux de traitement, de refroidissement ou d'eaux usées ou pour des stations d'épuration ou des installations hydroélectriques ou à utiliser dans un canal de guidage d'eau (2) d'une structure d'admission (3) d'eau de refroidissement d'une centrale électrique,
avec une bande-tamis sans fin (6), qui circule dans une direction de déplacement (7) et plonge dans le flux liquide (5), et qui forme, dans une partie (10) active en filtration de la bande-tamis sans fin (6) qui est disposée dans le flux liquide (5), une surface de tamisage dans le caniveau,
sachant que la partie (10) active en filtration de la bande-tamis sans fin (6) est orientée au moins approximativement ou essentiellement transversalement à la direction d'écoulement (4) du flux liquide (5) dans le caniveau,
et avec un dispositif d'entraînement pour entraîner la bande-tamis sans fin (6) dans sa direction de déplacement (7),
**caractérisée en ce que** la bande-tamis sans fin (6) est réalisée sous la forme d'une bande-tamis sans fin (6) qui peut être repliée ou recourbée sur elle-même ou comprimée de manière souple transversalement à sa direction de déplacement (7),
qui est déployée dans la partie (10) active en filtration, disposée dans le flux liquide (5), et qui est repliée ou recourbée sur elle-même ou comprimée transversalement à sa direction de déplacement (7) dans une partie de compression (11) qui est disposée, par rapport à la partie (10) active en filtration, en amont dans le flux liquide (5).

2. Machine à bande-tamis (1) selon la revendication 1, **caractérisée en ce que** la direction d'écoulement (4) dans la partie (10) active en filtration est dirigée à travers la bande-tamis sans fin (6) depuis le côté intérieur (12) de la bande-tamis sans fin (6) vers le côté extérieur (14) de la bande-tamis sans fin (6).

3. Machine à bande-tamis (1) selon l'une des revendications précédentes, **caractérisée en ce que** la direction de déplacement (7) de la partie (10) active en filtration est dirigée vers le haut, et celle de la partie de compression (11) vers le bas.

4. Machine à bande-tamis (1) selon l'une des revendications précédentes, **caractérisée en ce que** la partie de compression (11) de la bande-tamis sans fin (6) est essentiellement inactive en filtration.

5. Machine à bande-tamis (1) selon l'une des revendications précédentes, **caractérisée en ce qu'**elle présente un déflecteur de flux entrant (25) disposé en amont de la partie de compression (11) dans le flux liquide (5), déflecteur à l'abri duquel est disposée la partie de compression (11) de la bande-tamis sans fin (6).

6. Machine à bande-tamis (1) selon l'une des revendications précédentes, **caractérisée en ce qu'**elle présente, entre la partie de compression (11) et la partie (10) active en filtration de la bande-tamis sans fin (6), des ouvertures de flux entrant (26) par lesquelles le flux liquide (5) peut affluer à l'intérieur (12) de la machine à bande-tamis (1).

7. Machine à bande-tamis (1) selon l'une des revendications précédentes, **caractérisée en ce que** la partie (10) active en filtration est, sur son côté situé en aval, maintenue uniquement par un guide (27) s'étendant sur ses deux bords, de sorte qu'elle peut se cambrer ou s'infléchir dans la direction d'écoulement (4).

8. Machine à bande-tamis (1) selon l'une des revendications précédentes, **caractérisée en ce que** la bande-tamis sans fin (6) peut être repliée ou recourbée sur elle-même ou comprimée transversalement à sa direction de déplacement (7) en accomplissant un mouvement de pliage, de flexion ou de courbure.

9. Machine à bande-tamis (1) selon l'une des revendications précédentes, **caractérisée en ce que** le rapport de l'étendue transversale de la bande-tamis sans fin (6) dans la partie (10) active en filtration à l'étendue transversale de la bande-tamis sans fin (6) dans la partie de compression (11) est compris entre 3 : 1 et 1,1 : 1, de préférence entre 2,5 : 1 et 1,5 : 1.

10. Machine à bande-tamis (1) selon l'une des revendications précédentes, **caractérisée en ce que** la bande-tamis sans fin (6) est réalisée sous la forme d'une bande souple perforée de matière plastique, d'une bande textile ou d'une bande de chaîne à maillons.

11. Machine à bande-tamis (1) selon l'une des revendications précédentes, **caractérisée en ce que** le dispositif d'entraînement destiné à entraîner la bande-tamis sans fin (6) dans sa direction de déplacement (7) comprend deux roues d'entraînement qui sont chacune disposées sur un côté de la bande-tamis sans fin (6), sachant que les roues d'entraînement sont disposées l'une par rapport à l'autre sous un angle qui est déterminé par le rapport de l'étendue transversale de la bande-tamis sans fin (6) dans la partie (10) active en filtration à l'étendue transversale de la bande-tamis sans fin (6) dans la partie de compression (11).

12. Machine à bande-tamis (1) selon l'une des revendications précédentes, **caractérisée en ce que** le sommet du renvoi de la partie inférieure (9), située en aval, de la bande-tamis sans fin (6) est disposé plus bas que le sommet du renvoi de la partie inférieure (8), située en amont, de la bande-tamis sans fin (6).

13. Machine à bande-tamis (1) selon l'une des revendications précédentes, **caractérisée en ce qu'**elle présente des buses de pulvérisation (22) ou des buses d'air comprimé disposées sur le côté extérieur de la bande-tamis sans fin (6), ainsi qu'un caniveau de collecte de saletés (23) disposé sur le côté intérieur (12), opposé aux buses de pulvérisation (22) ou buses d'air comprimé, de la bande-tamis sans fin (6) et destiné à recueillir les saletés enlevées de la bande-tamis sans fin (6) par la pulvérisation.

14. Procédé pour séparer et extraire mécaniquement des composants solides, corps solides ou matières solides d'un flux liquide (5) s'écoulant dans un caniveau, au moyen d'une machine à bande-tamis (1), en particulier une grille de tamisage ou de filtration pour des flux de traitement, de refroidissement ou d'eaux usées ou pour des stations d'épuration ou des installations hydroélectriques ou à utiliser dans un canal de guidage d'eau (2) d'une structure d'admission (3) d'eau de refroidissement d'une centrale électrique,
avec une bande-tamis sans fin (6), qui circule dans une direction de déplacement (7) et plonge dans le flux liquide (5), et qui forme, dans une partie (10) active en filtration de la bande-tamis sans fin (6) qui est disposée dans le flux liquide (5), une surface de tamisage dans le caniveau,
sachant que la partie (10) active en filtration de la bande-tamis sans fin (6) est orientée au moins approximativement ou essentiellement transversalement à la direction d'écoulement (4) du flux liquide (5) dans le caniveau,
et avec un dispositif d'entraînement pour entraîner la bande-tamis sans fin (6) dans sa direction de déplacement (7),
**caractérisé en ce qu'**on utilise une bande-tamis sans fin (6) qui est réalisée sous la forme d'une bande-tamis sans fin (6) qui peut être repliée ou recourbée sur elle-même ou comprimée de manière souple transversalement à sa direction de déplacement (7),
et la bande-tamis sans fin (6) est déployée dans la partie (10) active en filtration, disposée dans le flux liquide (5),
et est repliée ou recourbée sur elle-même ou comprimée transversalement à sa direction de déplacement (7) dans une partie de compression (11) qui est disposée, par rapport à la partie (10) active en filtration, en amont dans le flux liquide (5).
